# EUROPÄISCHE PATENTANMELDUNG

(11) **EP 2 816 551 A1**
(43) Veröffentlichungstag der Anmeldung: **24.12.2014**
(21) Anmeldenummer: 14158658.6
(22) Anmeldetag: 10.03.2014
(51) Int. Cl.: G10L 15/12

(54) **Textprojektionsvorrichtung**

(30) Priorität: 18.03.2013 DE 102013102735
(71) Anmelder: Mayer, Karlheinz, 81927 München (DE)
(72) Erfinder: Mayer, Karlheinz, 81927 München (DE)
(74) Vertreter: Franke, Dirk

(57) **Zusammenfassung**

Die vorliegende Erfindung betrifft ein Verfahren zum zeitlichen Synchronisieren eines eine Unterhaltungsaufführung (12) beschreibenden Referenzsignals (54) mit einem eine inhaltsgleiche Unterhaltungsaufführung (12) beschreibenden Testsignal (60), um innerhalb des Referenzsignals (54) vorgebbare Zeitpunkte (56) im Testsignal (60) zu finden, umfassend Anpassen eines Testbereichs (74) zwischen einem als bekannte vorausgesetzten Starttestabschnitt (70) im Testsignal (60) und einem auf den Starttestabschnitt (70) folgenden Zwischentestabschnitt (66) im Testsignal (60) an einen Referenzbereich (72) zwischen einem Startreferenzabschnitt (68) im Referenzsignal (54) und einem auf den Startreferenzabschnitt (68) folgenden Zwischenreferenzabschnitt (64) derart, dass der Testbereich (74) mit dem Referenz-bereich (72) in einer vorgebbaren Weise korreliert.

## Beschreibung

Die Erfindung betrifft ein Verfahren zum zeitlichen Synchronisieren eines eine Unterhaltungsaufführung beschreibenden Referenzsignals mit einem eine inhaltsgleiche Unterhaltungsaufführung beschreibenden Testsignal, ein Verfahren zum Betexten einer Unterhaltungsaufführung mit Informationseinblendungen und/oder Inserts, eine Steuervorrichtung zur Durchführung eines der Verfahren und eine Projektionsvorrichtung mit der Steuervorrichtung.

Aus der US 1,998,889 ist eine Projektionsvorrichtung bekannt, in der ein Video und eine Untertitelspur durch einen Startknopf bei der Videoausgabe aufeinander synchronisiert werden.

Es ist Aufgabe der Erfindung, die bekannte Projektionsvorrichtung zu verbessern.

Gemäß einem Aspekt der Erfindung umfasst ein Verfahren zum zeitlichen Synchronisieren eines eine Unterhaltungsaufführung beschreibenden Referenzsignals mit einem eine inhaltsgleiche Unterhaltungsaufführung beschreibenden Testsignal, um innerhalb des Referenzsignals vorgebbare Zeitpunkte im Testsignal zu finden ein Anpassen eines Testbereichs zwischen einem als bekannte vorausgesetzten Starttestabschnitt im Testsignal und einem auf den Starttestabschnitt folgenden Zwischentestabschnitt im Testsignal an einen Referenzbereich zwischen einem Startreferenzabschnitt im Referenzsignal und einem auf den Startreferenzabschnitt folgenden Zwischenreferenzabschnitt derart, dass der Testbereich mit dem Referenzbereich in einer vorgebbaren Weise korreliert.

Dem angegebenen Verfahren liegt die Überlegung zugrunde, dass das automatische Einblenden von Informationseinblendungen, wie Untertitel, in eine Bühnenaufführung oder in eine Videosequenz nur dann möglich ist, wenn die Zeitpunkte der Einblendungen im Vorfeld bekannt sind. Liegt die zeitlich unbekannte Bühnenaufführung oder Videosequenz (wie sie beispielsweise bei Live-Übertragungen im Fernsehen zu finden ist) in Form einer Referenzaufführung vor und wird angenommen, dass beide Aufführungen inhaltsgleich sind, dann sind die einzigen Abweichungen zwischen den beiden Aufführungen lediglich in zeitlichen Verzögerungen zu finden, wie sie in der Regel durch ein klatschendes Publikum oder eine unterschiedliche Geschwindigkeit bei der Aufführung eines musikalischen Werks entstehen können.

Diese Überlegung zugrunde gelegt, schlägt das angegebene Verfahren vor, den in Form eines Testsignals zur Verfügung stehenden Teil der Bühnenaufführung oder der Videosequenz zu betrachten und ihn entsprechend lokal zu stauchen oder zu strecken, bis der zur Verfügung stehenden Teil der Bühnenaufführung oder der Videosequenz mit der in Form eines Referenzsignals zur Verfügung stehenden Referenzaufführung einen vorbestimmten Korrelationsgrad überschreitet, vorzugsweise maximal ist. Die Korrelation kann dabei über die mathematisch bekannte Kreuzkorrelation, über basierend auf Abständen berechneten Ähnlichkeiten oder in beliebiger anderer Weise bestimmt und maximiert werden. Ein Beispiel dafür wäre die Verwendung des "dynamic-time-warping"-Verfahrens, das auch unter der Abkürzung DTW-Verfahren bekannt ist. Details dazu werden weiter unten im detaillierten Ausführungsbeispiel beschrieben.

Mit dem angegebenen Verfahren ist es möglich, basierend auf einer bereits betitelten Referenzaufführung eine inhaltsgleiche Testaufführung automatisch, ohne einen Benutzereingriff zu betiteln. Dies hat insbesondere bei Live-Aufführungen den Vorteil, dass eine große Anzahl an sich kontextabhängiger Texteinblendungen, die sich beispielsweise hinsichtlich der Darsteller unterscheiden können von einer einzigen Steuereinrichtung zu den geplanten Einblendungszeiten mit einer Präzision eingeblendet werden können, die die menschliche Präzision spürbar überschreiten.

Unter eine Unterhaltungsaufführung kann beispielsweise eine musikalische Darbietung wie eine Oper, eine Operette, eine Musical oder ein Konzert oder ein Schauspiel fallen. Alternativ oder zusätzlich kann die Unterhaltungsaufführung auch im Rahmen einer Fernsehübertragung ausgestrahlt werden. Dabei sollen unter inhaltgleichen Unterhaltungsaufführungen solche verstanden werden, die dasselbe aufzuführende Stück vom Thema her behandelt, wobei sich zwischen den Unterhaltungsaufführungen die Randbedingungen wie die darstellenden Schauspieler, die Wiedergabegeschwindigkeiten oder sogar einzelne Kapitel des aufzuführenden Stückes unterscheiden.

In einer Weiterbildung umfasst das angegebene Verfahren den Schritt Anpassen eines auf den Testbereich folgenden weiteren Testbereichs zwischen dem Zwischentestabschnitt und einem auf den Zwischentestabschnitt folgenden weiteren Zwischentestabschnitt im Testsignal an einen auf den Referenzbereich folgenden weiteren Referenzbereich zwischen dem Zwischenreferenzabschnitt und einem auf den Zwischenreferenzabschnitt folgenden weiteren Zwischenreferenzabschnitt derart, dass der weitere Testbereich mit dem weiteren Referenzbereich in einer vorgebbaren Weise korreliert. Das heißt, dass im Rahmen des angegebenen Verfahrens vorgeschlagen wird, immer nur einen aktuellen Ausschnitt aus der Testaufführung schrittweise über die Zeit zu betrachten.

In einer besonderen Weiterbildung umfasst das angegebene Verfahren den Schritt Wiederholen des Anpassens eines auf den Testbereich folgenden weiteren Testbereichs an einen auf den Referenzbereich folgenden weiteren Referenzbereich, bis ein letzter Referenzabschnitt im Referenzsignal erreicht ist. Ist das Ende der Referenzaufführung erreicht, können sämtliche nachfolgenden Abschnitte in der Testaufführung, wie sie beispielsweise durch Applaus auftreten, ignoriert werden.

In einer anderen Weiterbildung des angegebenen Verfahrens wird das Referenzsignal beim Anpassens eines auf den Testbereich folgenden weiteren Testbereichs an einen auf den Referenzbereich folgenden weiteren Referenzbereich innerhalb eines vorbestimmten Fensters im Referenzsignal betrachtet, das den Zwischenreferenzabschnitt und den auf den Zwischenreferenzabschnitt folgenden weiteren Zwischenreferenzabschnitt enthält. Auf diese Weise kann der zur Durchführung des Verfahrens notwendige Speicherbedarf spürbar gesenkt werden, denn es braucht nicht das gesamte Referenzsignal in den Speicher geladen zu werden, sondern nur der aktuell zur Durchführung des Verfahrens notwendige Teil des Referenzsignals. Dies steigert auch die Geschwindigkeit, mit der das Verfahren auf einem Rechner ausgeführt wird, weil der Speicherbereich auf den zur Ausführung des Verfahrens zugegriffen werden muss, beschränkt wird. Dieser Vorteil tritt insbesondere bei sehr langen, teils über Stunden dauernden Referenz- und Testaufführungen spürbar zu Tage.

In einer besonderen Weiterbildung des angegebenen Verfahrens wird das Fenster im Referenzsignal nach vorn geschoben wird, wenn der weitere Referenzbereich in einem vorbestimmten Bereich des Fensters liegt. Dieser Ausführung liegt die Überlegung zugrunde, dass sich die Referenzaufführung wie die Testaufführung durch ihren Inhaltsbezug in zeitlicher Richtung ähnlich entwickeln müssen. Ist daher ein für die Herstellung der oben genannten Korrelation zwischen dem Referenzsignal und dem Testsignal notwendiger aktueller Referenzabschnitt nicht im vorbestimmten Bereich des Fensters zu finden, dann sollte dieser aktuelle Referenzabschnitt an einer zeitlich späteren Stelle von der aktuellen Lage des Fensters aus gesucht und damit das Fenster selbst in Richtung dieser zeitlich späteren Stelle verschoben werden.

In einer bevorzugten Weiterbildung des angegebenen Verfahrens ist der vorbestimmte Bereich des Fensters von einem Startpunkt des Referenzsignals aus gesehen die obere Hälfte des Fensters. Auf diese Weise wird sichergestellt, dass das Fenster immer mittig zum aktuell notwendigen Referenzabschnitt für die Herstellung der Korrelation zwischen dem Referenzsignal und dem Testsignal platziert wird.

In einer besonders bevorzugten Weiterbildung des angegebenen Verfahrens wird zum Anpassen des Testbereichs an den Referenzbereich der Testbereich entsprechend gestreckt, wenn der Testbereich kleiner als der Referenzbereich ist, und gestaucht wird, wenn der Testbereich größer als Referenzbereich ist. In diesem Zusammenhang sollte erwähnt werden, dass der Testbereich unverändert bleibt, wenn er ohnehin schon mit dem Referenzbereich maximal korelliert.

In einer zusätzlichen Weiterbildung des angegebenen Verfahrens sind der Starttestabschnitt und der Startreferenzabschnitt ein erster Signalwert oder ein erster Vektor entsprechend im Testsignal und im Referenzsignal. Unter einem Vektor kann nachstehend ein Abschnitt von mehreren Signalwerten im Testsignal oder Referenzsignal verstanden werden. Alternativ oder zusätzlich kann der Vektor auch Merkmale enthalten, die den Signalabschnitt beschreiben. Derartige Merkmale können beispielsweise spektrale Koeffizienten, Prädiktorkoeffizienten oder Nulldurchgangskoeffizienten sein. Der Vollständigkeit halber sei erwähnt, dass ein Abschnitt im Test- oder Referenzsignal ein einzelner Signalwert oder ein Vektor darstellen kann. Demgegenüber stellt ein Bereich innerhalb des Test- oder Referenzsignals wie oben bereits angedeutet die Differenz zwischen zwei Signalwerten oder zwei Vektoren dar.

Gemäß einem weiteren Aspekt der Erfindung umfasst ein Verfahren zum Betiteln einer Unterhaltungsaufführung mit Informationseinblendungen, wie Untertitel und/oder Insert, unter Verwendung eines zuvor angegebenen Verfahrens, wobei die Unterhaltungsaufführung durch das Testsignal beschrieben wird, die Schritte Zuordnen der zu betitelnden Informationseinblendungen zu den vorgebbaren Zeitpunkten im Referenzsignal, Finden der vorgebbaren Zeitpunkte in dem Testsignal mit dem zuvor angegebenen Verfahren und Einblenden einer Informationseinblendung in die Unterhaltungsaufführung, wenn sein entsprechender vorgebbarer Zeitpunkt aus dem Referenzsignal in dem Testsignal gefunden ist.

In einer Weiterbildung des angegebenen Verfahrens ist die Unterhaltungsaufführung eine Live-Unterhaltungsaufführung. Prinzipiell lässt sich mit dem angegebenen Verfahren jede beliebige Aufführung mit Informationseinblendungen versehen, die in Form eines Testsignals vorliegt und zu der eine Referenzaufführung erstellt wurde, die als Referenzsignal vorliegt. Besonders effektiv wirkt das Verfahren jedoch an Live-Aufführungen, bei denen nicht klar ist, wie und in welcher Weise die Testaufführung in der Zukunft gegenüber der Referenzaufführung gestreckt oder gestaucht wird.

In einer besonderen Weiterbildung des angegebenen Verfahrens sind die Informationseinblendungen in dem Referenzsignal von einer Handlung der Unterhaltungsaufführung abhängig und für die Handlung unterscheidbar ausgebbar. Die von der Handlung unterscheidbaren Informationseinblendungen können sich beispielsweise farblich, in einer Schriftgröße oder in einer Schriftform voneinander unterscheiden. Die Handlung selbst kann beispielsweise, wie bereits weiter oben erwähnt, nach Schauspielern oder auch nach Haupthandlung und Hintergrundhandlung unterschieden werden. Der Vorteil des Verfahrens tritt hier wie ebenfalls oben erwähnt insbesondere dann zu Tage, wenn eine besonders hohe Anzahl an unterschiedlichen handlungsabhängigen Informationseinblendungen auszugeben ist, die von einer einzelnen Person gar nicht mehr in Echtzeit überschaut werden können.

Bevorzugt sind die unterscheidbar ausgebbaren Informationseinblendungen dabei nach den Darstellern der Unterhaltungsaufführung klassifiziert.

Besonders bevorzugt beträgt die Anzahl der unterscheidbar ausgebbaren Informationseinblendungen dabei wenigstens zwei.

Gemäß einem weiteren Aspekt der Erfindung ist eine Steuervorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist. Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst eine Projektionsvorrichtung zum Betiteln einer in Form eines Referenzsignals zur Verfügung stehenden Bühnenaufführung, die als Testsignal aufgenommen wird, mit Informationseinblendungen an Zeitpunkten, die im Referenzsignal vorgegeben sind, an eine der angegebenen Steuervorrichtungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- Fig. 1: eine Prinzipdarstellung einer Projektionsvorrichtung mit einer Steuervorrichtung zum Einblenden von Untertiteln,
- Fig. 2: eine Darstellung eines eine Live-Aufführung und einer Referenzaufführung beschreibenden Signals, und
- Fig. 3: eine Darstellung einer Abstandsmatrix zur Durchführung eines "*dynamic time warping*"-Verfahrens zeigen.

In den Figuren werden gleiche technische Elemente mit gleichen Bezugszeichen versehen und nur einmal beschrieben.

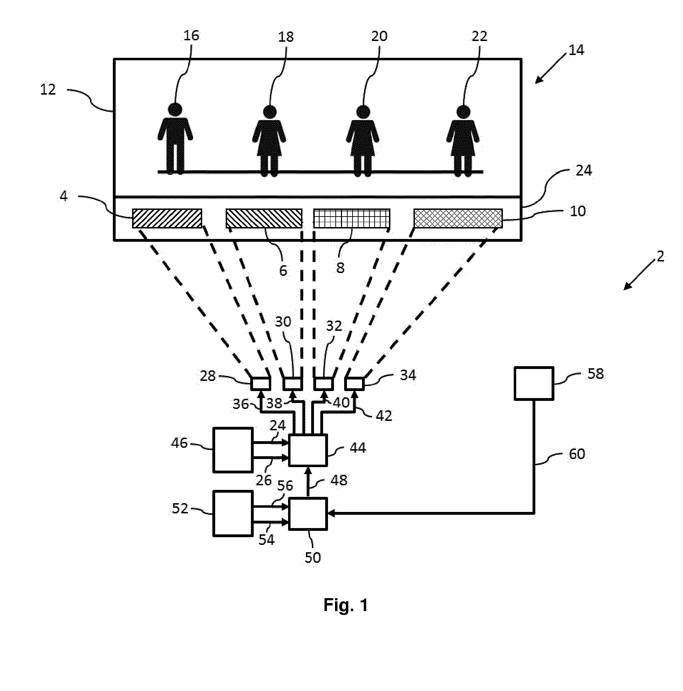

Es wird auf Fig. 1 Bezug genommen, die schematisch eine Projektionsvorrichtung 2 zum Einblenden von Informationseinblendungen, die nachstehend Untertitel 4, 6, 8, 10 sein sollen, in eine Live-Aufführung 12 eines Opernwerks auf einer Bühne 14 zeigt. Informationseinblendungen stellen dabei sich mit der Live-Aufführung 12 zeitlich verändernde Informationen zu dem Opernwerk, wie beispielsweise die von den Darstellern gesungenen und/oder gesprochenen Texte in Form der Untertitel 4, 6, 8, 10 dar. Das Opernwerk der Live-Aufführung 12 wird in der vorliegenden Ausführung von vier Darstellern 16, 18, 20, 22 gespielt, die sich in Fig. 1 alle auf der Bühne 14 befindend dargestellt sind. Damit die einzelnen, von den Darstellern 16, 18, 20, 22 im Rahmen des Opernwerks gesungenen und gesprochenen Texte 24 für den Zuschauer eindeutig unterscheidbar mit den Untertiteln 4, 6, 8, 10 wiedergegeben werden können, werden die Untertitel 4, 6, 8, 10 in der vorliegenden Ausführung abhängig von den Ihn zugeordneten Darstellern mit verschiedenen Unterscheidungshilfen 26, wie Farbe, Form oder zeitlichen Veränderungen wie einem Blinken versehen, worauf an späterer Stelle näher eingegangen wird. Außerdem könnten die Untertitel 4, 6, 8, 10 beispielsweise auch in lokaler Nähe zu den ihn zugeordneten Darstellern 16, 18, 20, 22 ausgegeben werden.

Zum Einblenden der Untertitel 4, 6, 8, 10 in die Live-Aufführung 12 werden die Projektoren 28, 30, 32, 34 werden basierend auf Steuersignalen 36, 38, 40, 42 aus einer Steuereinrichtung 44 angesteuert. Die Steuersignale 36, 38, 40, 42 generiert die Steuervorrichtung 44 dabei basierend auf den zur Darstellung der Untertitel 4, 6, 8, 10 notwendigen Informationen, die beispielsweise die zuvor genannten Texte 24 und die Unterscheidungshilfen 26 zur Darstellung der Texte, und die in einem Untertitelspeicher 46 hinterlegt sein können. Die zeitliche Ausgabe der einzelnen Untertitel 4, 6, 8, 10 durch die Projektoren 28, 30, 32, 34 wird dabei durch ein Zeitgebersignal 48 aus einer Zeitgebereinrichtung 50 vorgegeben.

Um das Zeitgebersignal 48 in der Zeitgebereinrichtung 50 zu generieren, wird in der vorliegenden Ausführung eine vorab aufgezeichnete und in einem Referenzspeicher 52 als Referenztonspur 54 hinterlegte Referenzaufführung synchron zur Live-Aufführung 12 betrachtet. Die Referenztonspur 54 könnte dabei im Referenzspeicher 52 beispielsweise mit einem an sich bekannten Zeitcode hinterlegt sein. Dabei stellen die Referenzaufführung und die Live-Aufführung 12 im Wesentlich eine inhaltsgleiche Wiedergabe des Opernwerks dar. Bestimmte Zeitpunkte der Referenztonspur 54 sind dabei mit Zeitgeberinformationen 56 verknüpft, die die zeitliche Ausgabe der einzelnen Untertitel 4, 6, 8, 10 durch die Projektoren 28, 30, 32, 34 vorgegeben und daher zur Generation des Zeitgebersignals 48 verwendet werden können. Würde die Live-Aufführung 12 exakt in derselben zeitlichen Weise ablaufen, wie die Referenzaufführung, bräuchte die Zeitgebereinrichtung 50 zur Generierung des Zeitgebersignals 48 lediglich die Referenzaufführung über die Zeit zu betrachten und die Zeitgeberinformationen 56 als Zeitgebersignal 48 auszugeben, wenn diese in der synchron zur Live-Aufführung 12 ablaufenden Referenzaufführung auftreten.

Dabei ist jedoch zu beachten, dass die Live-Aufführung 12 durch unbeeinflussbare Ereignisse zeitlich anders ablaufen kann, als die Referenzaufführung. Beispielsweise kann das Opernwerk in der Referenzaufführung schneller ausgeführt werden, als in der Live-Aufführung 12. Zudem darf ein in Fig. 1 nicht weiter dargestelltes Publikum nicht vernachlässigt werden, das beispielsweise durch Applaus ebenfalls die Live-Aufführung 12 gegenüber der Referenzaufführung verzögern könnte.

Um diese unvorhergesehenen Ereignisse bei der Generierung des Zeitgebersignals 48 zu berücksichtigen und die mit der Referenztonspur 54 verknüpften Zeitgeberinformationen 56 in der Live-Aufführung 12 an den zur Referenzaufführung passenden Zeitpunkten zur Einblendung der Untertitel 4, 6, 8, 10 zu verwenden, wird im Rahmen der vorliegenden Ausführung vorgeschlagen, vor der Generierung des Zeitgebersignals 48 die die Referenzaufführung beschreibende Referenztonspur 54 an die Live-Aufführung 12 anzupassen. Dazu wird die Live-Aufführung 12 in der vorliegenden Aufführung über ein Mikrofon 58 aufgezeichnet und als Testsignal in Form einer Live-Tonspur 60 an die Zeitgebereinrichtung 50 ausgegeben. Die Zeitgebereinrichtung 50 streckt oder staucht dann die Referenztonspur 54 zusammen mit den mit ihr verknüpften Zeitgeberinformationen 56 derart, dass die Referenztonspur 54 an die Live-Tonspur 60 angeglichen wird. Auf eine entsprechend notwendige Abtastung und Digitalisierung der Live-Tonspur 60 aus dem Mikrofon 58, die beispielsweise im Mikrofon 58 selbst durchgeführt werden kann, soll der Kürze halber verzichtet werden. Die Zeitgeberinformationen 56 aus der bearbeiteten Referenztonspur 54 können dann in der oben beschriebenen Weise zur Generierung des Zeitgebersignals 48 für die Einblendung der Untertitel 4, 6, 8, 10 verwendet werden.

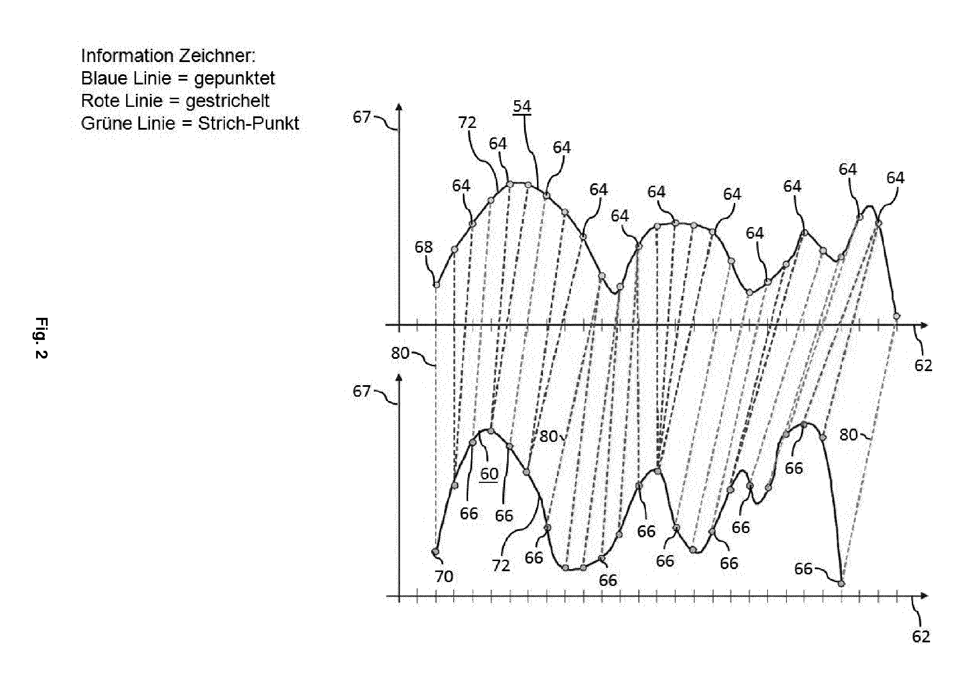

Bevor auf die Ausführung des zuvor angerissenen Grundgedankens anhand eines konkreten Verfahrens näher eingegangen werden soll, soll zuvor der Grundgedanke selbst anhand der Fig. 2 präzisiert werden, die die Referenztonspur 54 der Live-Tonspur 60 über die Zeit 62 gegenüberstellt.

Die Referenztonspur 54 und die Live-Tonspur 60 sind entsprechend durch Referenzabschnitte 64 und Live-Abschnitte 66 gekennzeichnet, die in an sich bekannter Weise jeweils einzelne Tonamplitudenwerte 67 auf der Referenztonspur 54 und auf der Live-Tonspur 60 oder Vektoren mehrerer aufeinanderfolgender Tonamplitudenwerte 67 auf der Referenztonspur 54 und auf der Live-Tonspur 60 beschreiben können. Dabei beginnen die Referenztonspur 54 und die Live-Tonspur 60 entsprechend mit einem Startreferenzabschnitt 68 und einem Live-Startabschnitt 70. Der Übersichtlichkeit halber sind in Fig. 2 nicht alle Referenzabschnitte 64 und Live-Abschnitte 66 mit einem Bezugszeichen versehen.

Der Grundidee folgend soll die Referenztonspur 54 gestaucht werden, wenn sich die Referenztonspur 54 gegenüber der Live-Tonspur 60 über die Zeit 62 zu langsam verändert. Dann sollender Grundidee der vorliegenden Ausführung folgend einem Live-Abschnitte 66 mehrere Referenzabschnitte 64 zugeordnet werden. Diese Zuordnungen sind in Fig. 2 mit gepunkteten Linien angedeutet.

Die Referenztonspur 54 soll demgegenüber gestreckt werden, wenn sich die Referenztonspur 54 gegenüber der Live-Tonspur 60 über die Zeit 62 zu schnell verändert. Dann sollender Grundidee der vorliegenden Ausführung folgend mehreren Live-Abschnitte 66 ein Referenzabschnitt 64 zugeordnet werden. Diese Zuordnungen sind in Fig. 2 mit gestrichelten Linien angedeutet.

Laufen die Referenztonspur 54 und die Live-Tonspur 60 über die Zeit 62 gleich schnell, soll genau einem Live-Abschnitt 66 ein Referenzabschnitt 64 zugeordnet werden, was in Fig. 2 mit Strichpunkt-Linien angedeutet ist.

Dazu werden auf der Referenztonspur 54 in Fig. 2 nicht durchgängig referenzierte Referenzbereiche 72 zwischen den Referenzabschnitten 64 mit nicht durchgängig referenzierten Live-Bereichen 74 zwischen den Live-Abschnitten 66 der Live-Tonspur 60 betrachtet und eine lokale Korrelation zwischen der Referenztonspur 54 und der Live-Tonspur 60 ermittelt. Die lokale Korrelation kann dabei in einer dem Fachmann bekannten Weise mathematisch beispielsweise anhand einer Kreuzkorrelation oder anhand von Abständen (beispielsweise Hamming-Distanz) ermittelt werden. Im Rahmen der angegebenen Ausführung soll die ermittelte lokale Korrelation zwischen einem aktuellen Live-Bereich 74 und einem dem aktuellen Live-Bereich 72 zugehörigen Referenzbereich 72 maximiert werden, was dazu führt, dass die Referenztonspur 54 über die Zeit an die Live-Tonspur 60 derart angepasst wird.

Ein bekanntes Verfahren, zwei Signale über die aneinander anzupassen ist das bekannte "dynamic time warping"-Verfahren, das beispielsweise im Rahmen der Spracherkennung verwendet wird. Im Rahmen des "dynamic time warping"-Verfahrens wird die Korrelation zweier Signale maximiert, indem ein Abstand, wie die genannte Hamming-Distanz, zwischen den beiden Signalen minimiert wird. Details hierzu können beispielsweise der US 4,918,733 entnommen werden.

Um das an sich an sich bekannte "dynamic time warping"-Verfahren auszuführen fehlt jedoch die vollständige Live-Tonspur 60, denn die Untertitel 4, 6, 8, 10 sollen bereits zu Zeitpunkten in die Live-Aufführung 12 eingeblendet werden, zu denen die Live-Aufführung 12 noch nicht beendet ist und die Live-Tonspur 60 damit noch nicht vollständig vorliegt.

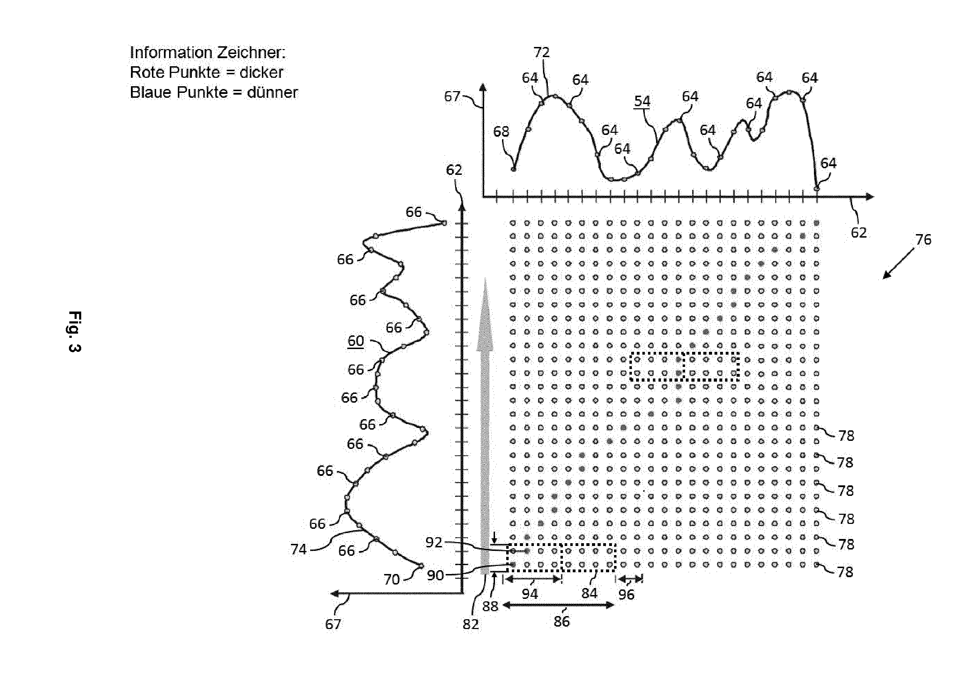

Daher wird im Rahmen der vorliegenden Ausführung ein abgewandeltes "dynamic time warping"-Verfahren verwendet, im Rahmen dessen zur Maximierung der Korrelation zwischen der Referenztonspur 54 und der Live-Tonspur 60 nicht ihr globaler minimaler Abstand sondern stets nur ihr lokaler minimaler Abstand bestimmt wird. Dieses Verfahren soll nachstehend anhand von Fig. 3 näher erläutert werden, die eine an sich bekannte Abstandsmatrix 76 zeigt, die im Rahmen eines "dynamic time warping"-Verfahrens zum Auffinden eines globalen minimalen Abstandes zwischen zwei Signalen verwendet werden kann.

Der Abstandsmatrix 76 umfasst eine Vielzahl von Punkten 78, die in Fig. 3 der Übersichtlichkeit halber nicht alle mit einem Bezugszeichen versehen sind. Die Abstandsmatrix 76 wird in der vorliegenden Ausführung spaltenweise über die Referenzabschnitte 64 in der Referenztonspur 54 und zeilenweise über die Live-Abschnitten 66 in der Live-Tonspur 60 aufgetragen. Jeder Punkt 78 in der Abstandsmatrix 76 repräsentiert einen Abstand 80, zwischen dem Referenzabschnitt 64, in dessen Spalte der gleiche Punkt 78 liegt und dem Live-Abschnitt 66, in dessen Zeile der Punkt liegt. Anschaulich betrachtet handelt es sich bei den Abständen um die in Fig. 2 gestrichelt, gepunktet und in Strich-Punkt dargestellten Linien, die der Übersichtlichkeit halber teilweise mit dem Bezugszeichen 80 referenziert sind.

Das bekannte "dynamic time warping"-Verfahren ordnet den Live-Abschnitten 66 in der im Rahmen der Fig. 2 erläuterten Weise Referenzabschnitte 54 zu, in dem es die Summe aller Abstände 80 unter der Annahme minimiert, dass ein Weg durch die Abstandsmatrix 76 in Fig. 3 von links unten nach rechts oben verlaufen muss, weil die beiden betrachteten Signale 54, 60 zum selben Zeitpunkt starten und enden sollten. Auf diese Weise würde die Referenztonspur 54 gestaucht oder gestreckt und an die Live-Tonspur 60 angepasst. Sind beide Signale 54, 60 von vorn herein gleich, dann führt das bekannte "dynamic time warping"-Verfahren zu einem diagonalen Verlauf durch die Abstandsmatrix 76.

Die Live-Abschnitte 66 sind jedoch, wie bereits erwähnt, nur bis zu einem bestimmten zeitlich fortlaufenden Zeitpunkt 82 bekannt, der in Fig. 3 durch einen dicken, parallel zur Zeitachse der Live-Tonspur 60 verlaufenden Pfeil angedeutet ist. Jedoch muss das oben genannte Zeitgebersignal 48 instantan mit dem Fortlauf der Live-Tonspur 60 erzeugt werden, da sonst keine für das Publikum der zur Live-Tonspur 60 gehörenden Live-Aufführung 12 nachvollziehbare und verständliche Einblendung der Untertitel 4, 6, 8, 10 möglich ist. Auf das Ende der Live-Aufführung 66 kann daher nicht gewartet werden, so dass zur Durchführung des bekannten "dynamic time warping"-Verfahrens keine vollständige Live-Tonspur 60 zur Verfügung steht.

Im Rahmen des abgewandelten "dynamic time warping"-Verfahrens, wird daher nicht nach dem globalen minimalen Abstand 80 über die Referenztonspur 54 und die Live-Tonspur 60 gesucht, sondern nur nach einem lokalen minimalen Abstand. Im Rahmen der Einblendung der Untertitel 4, 6, 8, 10 in die Live-Aufführung 12 hat dies aber nicht unbedingt negative Auswirkungen auf das Finden der maximalen Korrelation zwischen der Referenztonspur 54 und der Live-Tonspur 60. Da bei den zeitlich anzupassenden Tonspuren 54, 60 zwei inhaltlich ähnliche Varianten des oben genannten Opernwerks vorausgesetzt werden können, ist die maximale Korrelation zwischen der Referenztonspur 54 und der Live-Tonspur 60 nur in einem bestimmten Bereich um die weiter oben genannte Diagonale durch die Abstandsmatrix 76 zu erwarten.

Daher wird im Rahmen des abgewandelten "dynamic time warping"-Verfahrens nicht die gesamte Abstandsmatrix 76 sondern nur ein Fenster 84 in dieser betrachtet. Das Fenster 84 erstreckt sich über eine vorbestimmte Spaltenbreite 86 und eine vorbestimmte Zeilenhöhe 88. Unter der oben genannten Annahme, dass die maximale Korrelation und damit der minimale Abstand 80 zwischen der Referenztonspur 54 und der Live-Tonspur 60 nur in einem bestimmten Bereich um die Diagonale durch die Abstandsmatrix 76 zu erwarten ist, können die Abmaße 86, 88 des Fensters 84 sehr klein gewählt werden. Uninteressante Punkte 78 der Abstandsmatrix 76 außerhalb dieses Bereichs um die Diagonale würden daher nicht in einen zur Durchführung des Verfahrens notwendigen und nicht weiter dargestellten Speicher eingelesen, was zu einer deutlichen Reduzierung des Speicheraufwandes als auch zu einer deutlichen Reduzierung des Rechenaufwandes führt.

Das abgewandelte "dynamic time warping"-Verfahren wird in der vorliegenden Ausführung, wie bereits erwähnt, von der Zeitgebereinrichtung 50 ausgeführt.

Diese startet wie das bekannte "dynamic time warping"-Verfahren mit der Annahme, dass die Referenztonspur 54 und die Live-Tonspur 60 anfänglich synchronisiert sind. Daher beginnt auch das abgewandelte "dynamic time warping"-Verfahren willkürlich in der unteren linken Ecke der Abstandsmatrix 76, in der sich die Spalte des Startreferenzabschnitts 68 und die Zeile des Live-Startabschnitts 70 kreuzen, so dass die Zeitgebereinrichtung 50 dem Startreferenzabschnitt 68 stets den Live-Startabschnitt 70 zuordnet.

Gleichzeitig ist dies der erste Ausgangspunkt 90 zur Suche nach dem ersten lokalen minimalen Abstand 80 gesetzt. Für diese erste Suche liest die Zeitgebereinrichtung 50 die Abstände 80 in einen Speicher ein, die den Abständen 80 in der anfänglichen unteren, linken Lage des Fensters 84 in der Abstandsmatrix 76 entspricht. Dann sucht die Zeitgebereinrichtung 50 in dem Fenster 84 einen lokalen Minimumspunkt 92, zu dem der Abstand 80 ausgehend vom Ausgangspunkt 90 minimal und damit die Korrelation zwischen den beiden Punkten 90, 92 maximal ist. Abschließend ordnet die Zeitgebereinrichtung 50 dem Referenzabschnitt 64, der in der den Minimumspunkt 92 kreuzenden Spalte der Abstandsmatrix 76 liegt, den Live-Abschnitt 66, der in der den Minimumspunkt 92 kreuzenden Zeile der Abstandsmatrix 76 liegt zu. Liegt der Minimumspunkt 92 beispielsweise in der gleichen Zeile wie der Ausgangspunkt 90, wird die Referenztonspur 54 durch die zuvor genannte Zuordnung gestreckt. Liegt der Minimumspunkt 92 beispielsweise in der gleichen Spalte wie der Ausgangspunkt 90, wird die Referenztonspur 54 durch die zuvor genannte Zuordnung gestaucht.

Danach beginnt die Suche nach dem nächsten lokalen minimalen Abstand. Dazu setzt die Zeitgebereinrichtung 50 den aktuellen Minimumspunkt 92 als neuen Ausgangspunkt 90. Die Punkte 78 in der Zeile des Fensters 84 in Richtung des fortlaufenden Zeitpunktes 82 betrachtet hinter dem alten Minimumspunkt 92 und neuen Ausgangspunkt 90 werden durch die Zeitgebereinrichtung 50 verworfen. Dafür werden die Punkte 78 in Richtung des fortlaufenden Zeitpunktes 82 betrachtet vor dem neuen Ausgangspunkt 90 über die Breite 86 des Fensters 84 durch die Zeitgebereinrichtung 50 in den Speicher eingelesen. Damit wandert das Fenster 84 in Richtung des fortlaufenden Zeitpunktes 82 um einen Live-Abschnitt 66 nach vorn. Anschließend beginnt die Zeitgebereinrichtung 50 die Suche nach einem neuen Minimumspunkt 92 in der zuvor beschriebenen Weise, so dass die Referenztonspur 54 weiter an die Live-Tonspur 60 angepasst wird.

Dieses Verfahren wiederholt die Zeitgebereinrichtung 50, bis ein neuer Minimumspunkt 92 im Fenster 84 in Zeilenrichtung eine bestimmte Lage 94 innerhalb Fenster 84 überschreitet. Diese Lage 94 entspricht in der vorliegenden Ausführung einer halben Länge 86 des Fensters 84. Nach diesem Überschreiten schiebt die Zeitgebereinrichtung 50 das Fenster 84 um einen bestimmten Vorschub 96 nach vorn.

In Fig. 3 sind die Punkte 78, die von der Zeitgebereinrichtung 50 als Ausgangs- und Minimumspunkte 90, 92 ausgewählt und damit zur Streckung und Stauchung der Referenztonspur 54 verwendet werden, als dick gepunktet dargestellt. Diese Punkte sind jedoch der Übersichtlichkeit halber nicht mit einem Bezugszeichen versehen. Dabei ist auch eine weitere beispielhafte Lage des Fensters 84 dargestellt, das der Übersichtlichkeit halber ebenfalls nicht mit einem Bezugszeichen versehen ist.

## Patentansprüche

1. Verfahren zum zeitlichen Synchronisieren eines eine Unterhaltungsaufführung (12) beschreibenden Referenzsignals (54) mit einem eine inhaltsgleiche Unterhaltungsaufführung (12) beschreibenden Testsignal (60), um innerhalb des Referenzsignals (54) vorgebbare Zeitpunkte (56) im Testsignal (60) zu finden, umfassend:
- Anpassen eines Testbereichs (74) zwischen einem als bekannte vorausgesetzten Starttestabschnitt (70) im Testsignal (60) und einem auf den Starttestabschnitt (70) folgenden Zwischentestabschnitt (66) im Testsignal (60) an einen Referenzbereich (72) zwischen einem Startreferenzabschnitt (68) im Referenzsignal (54) und einem auf den Startreferenzabschnitt (68) folgenden Zwischenreferenzabschnitt (64) derart, dass der Testbereich (74) mit dem Referenzbereich (72) in einer vorgebbaren Weise korreliert.

2. Verfahren nach Anspruch 1, umfassend Anpassen eines auf den Testbereich (74) folgenden weiteren Testbereichs (74) zwischen dem Zwischentestabschnitt (66) und einem auf den Zwischentestabschnitt (66) folgenden weiteren Zwischentestabschnitt (66) im Testsignal (60) an einen auf den Referenzbereich (72) folgenden weiteren Referenzbereich (72) zwischen dem Zwischenreferenzabschnitt (64) und einem auf den Zwischenreferenzabschnitt (64) folgenden weiteren Zwischenreferenzabschnitt (64) derart, dass der weitere Testbereich (74) mit dem weiteren Referenzbereich (72) in einer vorgebbaren Weise korreliert.

3. Verfahren nach Anspruch 2, umfassend Wiederholen des Anpassens eines auf den Testbereich (74) folgenden weiteren Testbereichs (74) an einen auf den Referenzbereich (72) folgenden weiteren Referenzbereich (72), bis ein letzter Referenzabschnitt (64) im Referenzsignal (54) erreicht ist.

4. Verfahren nach Anspruch 2 oder 3, wobei das Referenzsignal (54) beim Anpassens eines auf den Testbereich (74) folgenden weiteren Testbereichs (74) an einen auf den Referenzbereich (72) folgenden weiteren Referenzbereich (72) innerhalb eines vorbestimmten Fensters (86) im Referenzsignal (54) betrachtet wird, das den Zwischenreferenzabschnitt (64) und den auf den Zwischenreferenzabschnitt (64) folgenden weiteren Zwischenreferenzabschnitt (64) enthält.

5. Verfahren nach Anspruch 4, wobei das Fenster (86) im Referenzsignal (54) nach vorn geschoben wird, wenn der weitere Referenzbereich (72) in einem vorbestimmten Bereich (94) des Fensters (86) liegt.

6. Verfahren nach Anspruch 5, wobei der vorbestimmte Bereich (94) des Fensters (86) von einem Startpunkt (68) des Referenzsignals (72) aus gesehen die obere Hälfte des Fensters (86) ist.

7. Verfahren nach einem der vorstehenden Ansprüche, wobei zum Anpassen des Testbereichs (74) an den Referenzbereich (72) der Testbereich (74) entsprechend gestreckt wird, wenn der Testbereich (74) kleiner als der Referenzbereich (72) ist, und gestaucht wird, wenn der Testbereich (74) größer als Referenzbereich (72) ist.

8. Verfahren nach einem der vorstehenden Ansprüche, wobei der Starttestabschnitt (70) und der Startreferenzabschnitt (68) ein erster Signalwert oder ein erster Vektor entsprechend im Testsignal (60) und im Referenzsignal (54) sind.

9. Verfahren zum Betexten einer Unterhaltungsaufführung (12) mit Informationseinblendungen (4, 6, 8, 10) und/oder Inserts unter Verwendung eines Verfahrens nach einem der vorstehenden Ansprüche, wobei die Unterhaltungsaufführung (12) durch das Testsignal (60) beschrieben wird, umfassend:
- Zuordnen der zu betitelnden Informationseinblendungen (4, 6, 8, 10) zu den vorgebbaren Zeitpunkten (56) im Referenzsignal (54),
- Finden der vorgebbaren Zeitpunkte (56) in dem Testsignal (60) mit dem Verfahren nach einem der vorstehenden Ansprüche und
- Einblenden einer Informationseinblendung (4, 6, 8, 10) in die Unterhaltungsaufführung (12), wenn sein entsprechender vorgebbarer Zeitpunkt (56) aus dem Referenzsignal (54) in dem Testsignal (60) gefunden ist.

10. Verfahren nach Anspruch 9, wobei die Unterhaltungsaufführung (12) eine Live-Unterhaltungsaufführung ist.

11. Verfahren nach Anspruch 9 oder 10, wobei die Informationseinblendungen (4, 6, 8, 10) in dem Referenzsignal (54) abhängig von einer Handlung der Unterhaltungsaufführung (12) abhängig für die Handlung unterscheidbar ausgebbar sind.

12. Verfahren nach Anspruch 11, wobei die unterscheidbar ausgebbaren Informationseinblendungen (4, 6, 8, 10) nach den Darstellern (16, 18, 20, 22) der Unterhaltungsaufführung (12) klassifiziert sind.

13. Verfahren nach Anspruch 11 oder 12, wobei die Anzahl der unterscheidbar ausgebbaren Informationseinblendungen (4, 6, 8, 10) wenigstens zwei beträgt.

14. Steuervorrichtung (50), die eingerichtet ist, ein Verfahren nach einem der vorstehenden Ansprüche auszuführen.

15. Projektionsvorrichtung (2) zum Betexten einer in Form eines Referenzsignals (54) zur Verfügung stehenden Bühnenaufführung (12), die als Testsignal (60) aufgenommen wird, mit Informationseinblendungen (4, 6, 8, 10) an Zeitpunkten (56), die im Referenzsignal (54) vorgegeben sind, umfassend eine Steuervorrichtung (50) nach Anspruch 14.
